# EUROPEAN PATENT APPLICATION

(11) **EP 1 283 520 A2**
(43) Date of publication of application: **12.02.2003**
(21) Application number: 02017533.7
(22) Date of filing: 06.08.2002
(51) Int. Cl.: G11B 7/125

(54) **Optical disc drive**

(30) Priority: 07.08.2001 JP 2001239600
(71) Applicant: Mitsumi Electric Company Ltd., Chofu-shi Tokyo (JP)
(72) Inventor: Maekawa, Yuichi, c/o Mitsumi Electric Co., Ltd., Atsugi-shi, Kanagawa (JP)
(74) Representative: Patentanwälte Dr. Solf & Zapf

(57) **Abstract**

Disclosed is an optical disc drive that can resume to record data consecutively from the position just after the data recording operation was suspended without overwriting when recording data onto an optical disc. The optical disc drive includes a rotational driving mechanism for rotating the loaded optical disc; an optical pickup having emitting means that emits laser beam for recording data onto the optical disc; a drive circuit for driving the emitting means, the drive circuit having a section for determining an output of the laser beam; and voltage hold means for holding a voltage value at which an output of the laser beam becomes an optimum laser output for recording. The voltage hold means holds the voltage at the section of the drive circuit to the voltage value at which the output of the laser beam becomes the optimum level for recording.

## Description

### BACKGROUND OF THE INVENTION

### Field of the invention

The present invention relates to an optical disc drive.

### Description of the Prior Art

There are known optical disc drives for recording data onto and reading data out from a recordable optical disc such as a CD-R, a CD-RW, and the like.

In general, such optical disc drives comprise a rotational driving mechanism for rotating a loaded optical disc; an optical pick-up (optical head) which is movable in a radial direction of the loaded optical disc for emitting a laser beam to record data (information) to, and read data from the optical disc; and an optical pick-up moving mechanism, which is equipped with a sled motor for moving the optical pick-up in a radial direction of the disc.

The optical pick-up comprises an optical pick-up body (optical pick-up base), which is equipped with a laser diode and a split photodiode; an objective lens, which is supported by suspension springs on the optical pick-up body to enable the lens to move in the direction of the optical axis of a loaded optical disc (rotational axis direction), as well as in a radial direction of the optical disc; a focusing actuator for moving the objective lens in the optical axis direction; and a tracking actuator for moving the objective leans in the radial direction.

In such optical disc drives, an optical pick-up is moved to a target track (target address), and at the target track data is recorded (written) onto the optical disc and/or read out (reproduced) from the optical disc, while a focus control operation and a tracking control operation are carried out.

In such optical disc drives, data is recorded onto an optical disc by being sequentially transferred from an external device, such as a personal computer, to a memory of the optical disc drive, and then being sequentially recorded onto the optical disc from the memory.

However, this system suffers from a problem in that an amount of data stored in the memory of the optical disc drive may, at any time during a recording operation, become insufficient due to latency in transfer of data from the external device.

When an amount of data stored in the memory of the optical disc drive falls below a predetermined amount, a recording operation is suspended. Then, once it is confirmed that an amount of data stored in the memory is equal to or exceeds the predetermined amount, the recording operation resumes at a position on the disc where it was suspended. Here, it is to be noted that in order to locate the position, an output of a laser beam is once lowered to a read level (reproduction level). Using this system, a data recording operation can be suspended and then resumed so that the data is consecutively written onto the optical disc.

However, an output of a laser beam must be raised from the read level to a write level (record level) when the data recording operation is resumed, which requires a predetermined amount of time to be completed.

Thus, in the conventional system, to record data onto an optical disc from a position consecutive to that where a recording operation was suspended (record restart position), the recording operation must be resumed from a predetermined position before the record restart position so that a level of the laser beam becomes a required write level (optimum level for recording) at the record restart position.

For this reason, the laser beam is being emitted along a track of the optical disc over a predetermined distance, i.e., the distance from the predetermined position to the record restart position for a predetermined time. As a result, data may be recorded onto an area of the track of the optical disc corresponding to the predetermined distance before the record restart position with a laser beam output that is increasing to the write level. Consequently, there is a problem that the data previously recorded in the area is overwritten with the laser beam so that the previously recorded data cannot be reproduced correctly.

Therefore, when a recording operation is suspended and resumed in many times, the number of such overwritten area is increased, thus leading the case that the above problem becomes conspicuous.

### SUMMARY OF THE INVENTION

In view of the stated problem of the conventional art, it is an object of the present invention to provide an optical disc drive wherein data recording can be resumed after suspension without any overwriting of data on an optical disc.

In order to achieve the above object, the present invention is directed to an optical disc drive that can read out data from or record and read out data to and from an optical disc when the optical disc is loaded into the optical disc drive. The optical disc drive comprises a rotational driving mechanism for rotating the loaded optical disc; an optical pick-up having emitting means that emits laser beam for recording data onto the optical disc; a drive circuit for driving the emitting means, the drive circuit having a section for determining an output of the laser beam; and voltage hold means for holding a voltage value at which an output of the laser beam becomes an optimum laser output for recording.

In this invention, it is preferred that the voltage hold means holds the voltage at the section of the drive circuit to the voltage value, at which the output of the laser beam becomes the optimum level for recording, after trial writing is carried out on the optical disc by changing the output of the laser beam in a stepwise manner to determine the optimum laser output for recording.

Further, the optical disc drive in the present invention may further comprise detection means for detecting voltage values corresponding to a plurality of output levels of the laser beam during the trial writing, in which said voltage hold means is configured so as to hold the voltage at the section to a voltage value corresponding to the optimum level for recoding among the voltages values detected by said detection means.

In one embodiment of the present invention, the optical disc drive may further comprise a memory for storing data. In this case, the optical disc drive may be configured so that the recoding operation is suspended when the amount of data stored in the memory becomes equal to or less than a predetermined amount during the recoding operation. Also, the voltage hold means may be configured so as to hold the voltage at the section just before the recording operation is suspended.

Moreover, in another embodiment of the present invention, the voltage hold means includes a circuit having a first input terminal to which a reference voltage is input, a second input terminal to which the voltage of the section is input, a third input terminal to which an adjustment voltage is input, and an output terminal for outputting an output voltage. In this case, the optical disc drive may be constructed so as to apply the adjustment voltage when the output voltage becomes the reference voltage, to the third input terminal.

In another embodiment of the present invention, the optical disc drive may further comprise a digital/analog converter that is used for adjusting the adjustment voltage. Alternatively or in addition, the optical disc drive of the present invention may further comprise an analog/digital converter that is used for detecting the output voltage. In this case, the voltage hold means may be a differential circuit using operational amplifier.

In another embodiment of the present invention, the voltage hold means may have a feedback circuit. The feedback circuit applies the output voltage to the input side of the drive circuit so that the voltage at the section is dropped when the voltage at the section is raised more than the voltage value of the optimum level for recording and so that the voltage at the section is raised when the voltage at the section is dropped less than the voltage value of the optimum level for recording. In this case, the optical disc drive of the present invention may further comprise switching means for switching the feedback circuit on and off.

Further, in this invention, it is preferred that the emitting means has a laser diode.

These and other objects, structures and advantages of the present invention will be apparent from the following description of the preferred embodiment when it is considered in conjunction with the appended drawings.

### BRIEF DESCRIPTION OF THE DRAWINGS

Fig. 1 is a block diagram illustrating a circuit configuration (principal part) of one embodiment of an optical disc drive according to the present invention.
Fig. 2 is a circuit diagram illustrating an example of a structure of a section for controlling an output of a laser beam in an optical disc drive during recording of data, according to the present invention.
Fig. 3 shows a flow of electric current in the circuit shown in Fig. 2 when an output of a laser beam is raised to level for recording data.
Fig. 4 is a tuning chart illustrating a WRITE POWER signal and the output of the laser beam during recording.

### DETAILED DESCRIPTION OF THE PREFERRED EMBODIMENTS

Detailed description of the preferred embodiment of an optical disc drive according to the present invention will now be made, with reference to the appended drawings.

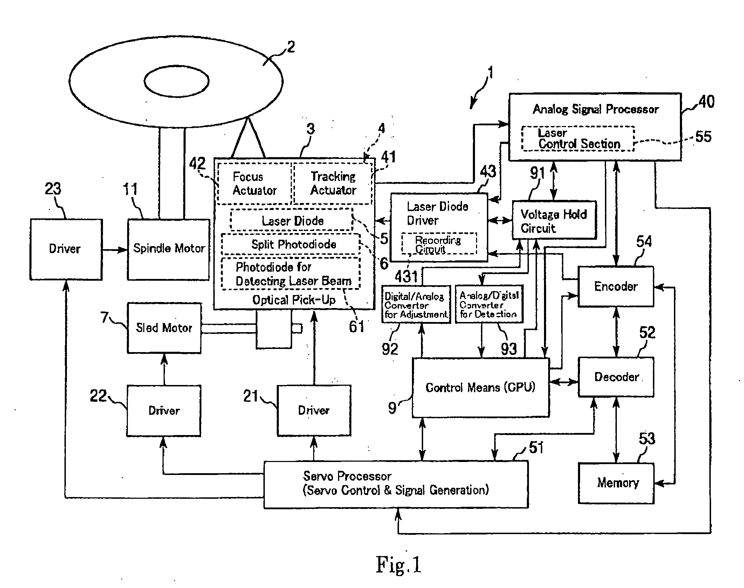

Fig. 1 is a block diagram illustrating a circuit configuration (principal part) of an embodiment of an optical disc drive according to the present invention.

The optical disc drive 1 as shown in Fig. 1 may record and/or reproduce data (information) to and/or from an optical disc 2 (for example, CD-R, CD-RW).

A spiral pre-groove (WOBBLE) (not shown) is formed along a track in the optical disc 2.

The spiral pre-groove is recorded with Absolute Time In Pre-groove (ATIP) information (time information), and meanders for a predetermined period (22.05 kHz as a reference speed) in a radial direction of the optical disc 2. More specifically, the ATIP information to be recorded is biphase modulated and frequency-modulated at a carrier frequency of 22.05 kHz.

The pre-groove may function as a guide groove to form pits and/or lands (recording of pits and lands) for optical disc 2. Further, information recorded in the pre-groove may be utilized for controlling a rotational speed of the optical disc 2. Additionally, the information recorded may be reproduced and used to specify a recording position (absolute time) on the optical disc 2.

The optical disc drive 1 has a rotation driving mechanism for rotating a turntable on which an optical disc 2 is loaded, the rotation driving mechanism has a spindle motor 11 for rotating the turntable, a driver 23 for driving the spindle motor 11, and the turntable (not shown) on which the optical disc 2 is provided.

Further, the optical disc drive 1 comprises an optical pick-up (optical head) 3 capable of moving in a radial direction of the optical disc 2 (a radial direction of a turntable with respect to the optical disc 2, which is loaded on the turntable); an optical pick-up moving mechanism for moving the optical pick-up 3 in the radial direction (two subject: disc and turntable; they should be unified); a control means (CPU) 9; an analog signal processor (ASP) 40; a laser diode driver 43; a servo processor (DSP) 51; a decoder 52; a memory 53 (e.g. Random Access Memory (RAM)); an encoder 54; a voltage hold circuit 91; a digital/analog converter 92 for adjustment; and an analog/digital converter 93 for detection. (Hereinafter, the radial direction of the optical disc 2 will be referred to simply as --- the radial direction ---)

The optical pick-up moving mechanism comprises a sled motor 7, a driver 22 for driving the sled motor 7, and a power transmission mechanism (not shown). A rotational speed of the sled motor 7 can be decelerated and transmitted to the optical pick-up 3 by the transmission mechanism, and the rotational movement of the sled motor 7 may be converted to the linear movement of the optical pick-up 3.

The optical pick-up 3 further comprises an optical head body (optical pick-up base) (not shown) that may be equipped with a laser diode 5 for emitting a laser beam; a split photodiode 6; and a photodiode for detecting a laser beam 61, which receives the laser beam emitted from the laser diode 5 and converts the amount of received light to an electric current. Moreover, the optical pick-up 3 comprises an objective lens (condenser) (not shown). The laser diode 5 is driven by means of a laser diode driver 43; and the drive of the laser diode driver 43 is controlled by means of the analog signal processor 40.

The analog signal processor 40 has a laser control section 55 for controlling an output of the laser beam when recording or reproducing data to or from the optical disc 2.

The laser diode driver 43 comprises a recording circuit 431 driven when the output of the laser beam emitted from the laser diode 5 is at a level for recording, and a reproducing circuit (not shown) driven when the output of the laser beam emitted from the laser diode 5 is at a level for reproducing.

The objective lens is supported by suspension springs (not shown in the drawings) provided on the optical pick-up base. Further, the objective lens is arranged so as to be movable with respect to the optical pick-up body in both a radial direction and an optical axis direction of the objective lens. Hereinafter, the direction of the optical axis of the objective lens will be referred to simply as --- the optical axis direction ---, and the direction of the rotational axis of the optical disc 2 will be referred to simply as --- the rotational axis direction---.

The objective lens is initially set at a reference position (center point), which is predetermined on the optical pick-up body, i.e., a neutral position (hereinafter, referred to simply as --- the reference position ---).

When the objective lens is shifted from its reference position, it is biased to its reference position by the restoring force of the suspension springs.

Further, the optical pick-up 3 has an actuator 4 for moving the objective lens with respect to the optical pick-up base. The actuator 4 comprises a tracking actuator 41 for moving the objective lens in a radial direction with respect to the optical pick-up base, and a focus actuator 42 for moving the objective lens in the optical axis direction (rotational axis direction).

The actuator 4, i.e., the tracking actuator 41 and the focus actuator 42 may be independently driven by the driver 21.

The control means 9 usually includes a microcomputer (CPU). The control means 9 carries out overall control of the optical disc drive 1. Namely, the control means 9 controls the optical pick-up 3 (including the actuator 4, the laser diode 5, and so on), the sled motor 7, the spindle motor 11, the analog signal processor 40, a servo processor 51, a decoder 52, a memory 53, an encoder 54, the voltage hold circuit 91, the digital/analog converter 92, and the like.

The voltage hold means comprises the control means 9, the voltage hold circuit 91, the digital/analog converter 92, and the analog/digital converter 93. The voltage hold means holds the voltage of the section, which determines an output of the laser beam of the recording circuit 431, at a voltage equivalent to a record output level of the laser beam.

The optical disc drive 1 may be removably connected to an external device (e.g., a computer) via an interface control section (not shown).

When the optical disc drive 1 records data onto the optical disc, the data to be recorded is sequentially transferred from the external device to the memory 53 via the interface control section, and then sequentially stored in the memory 53. The data stored in the memory 53 is then sequentially recorded onto the optical disc.

Further, when an amount of data stored in the memory 53 is less than a first amount, the data recording operation is suspended. If it is confirmed that a second amount of data exceeding the first amount is stored in the memory 53, the data recording operation is resumed from the same position on the disc where it was suspended (record restart position). Namely, the optical disc drive 1 employs a system whereby the data recording operation can be suspended and then resumed at a record restart position on the optical disc in a consecutive manner. As will hereinafter be described in detail, in the optical disc drive 1 the voltage hold means holds the voltage at the section for determining the output of the laser beam of the recording circuit 431 immediately prior to suspension of a data recording operation.

Hereinafter, the operation whereby data recording is suspended and resumed to record data consecutively will be referred to simply as --- consecutive data recording ---.

Next, the structure of the part for controlling an output of the laser beam while the optical disc drive records data, i.e., the structure of the laser diode 5, the photodiode for detecting a laser beam 61, the control means 9, the laser control section 55, the recording circuit 431, the voltage hold circuit 91, the digital/analog converter 92, and the analog/digital converter 93 will be described.

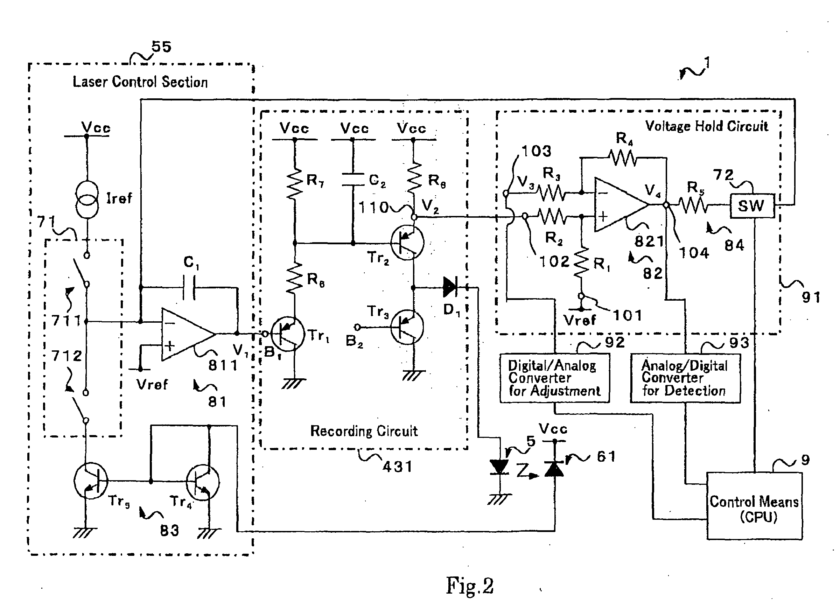

Fig. 2 is a circuit diagram illustrating an example of the structure of the section for controlling an output of the laser beam during recording of data in an optical disc drive according to the present invention.

The laser control section 55 as shown in Fig. 2, controls an output of the laser beam during recording of data in the sections of the overall laser control section 55. (data is not recorded into these sections.)

Referring now to Fig. 2, the laser control means 55 comprises a current mirror circuit 83 having two transistors Tr4 and Tr5, a current generator Iref, an interlock switch 71 having two switches 711 and 712, and integration circuit 81 having an operational amplifier 811 and a condenser C1.

The interlock switch 71 is constructed so that the switches 711 and 712 work in cooperation. When the switches 711 and 712 are closed together, the interlock switch 71 is turned ON.

The photodiode for detecting a laser beam 61 and the interlock switch 71 are connected to the current mirror circuit 83.

When the interlock switch 71 is ON, a current equal to the current flowing from the photodiode for detecting a laser beam 61 to transistor Tr4 is cause to flow from the current generator Iref to the transistor Tr5 in the current mirror circuit 83.

The reference voltage Vref having a predetermined level is applied to the non-inverting input terminal (+) of the operational amplifier 811 in the integration circuit 81; and the inverting input terminal (-) of the operational amplifier 81 is connected to the interlock switch 71.

The inverting input terminal (-) of the operational amplifier 81 is also connected to one terminal of the condenser C1; and the other terminal of the condenser C1 is connected to the output terminal of the operational amplifier 811.

Consequently, when the interlock switch 71 is turned ON, the current flows from the current generator Iref to the condenser C1, and also flows from the current generator Iref to the current mirror circuit 83.

As shown in Fig. 2, the recording circuit 431 comprises three resistance elements R6, R7 and R8, a condenser C2, three transistors Tr1, Tr2 and Tr3, and a diode D1.

The base terminal B1 in the transistor Tr1 is connected to the section (not shown) in the laser control section 55. A WRITE POWER signal is input from the laser control section 55 to the base terminal B1 in the transistor Tr1. Here, the WRITE POWER signal will be described later.

The voltage hold circuit 91 has a differential circuit 82, which comprises a first input terminal 101 in which the reference voltage Vref having a predetermined level is input, a second input terminal 102 in which the voltage V2 that is applied to the node 110 in the recording circuit 431 (the section for determining the output of the laser beam) is input, a third input terminal 103 in which the adjustment voltage V3 is input, and an output terminal 104 in which the output voltage V4 is output.

The differential circuit 82 comprises four resistance elements R1, R2, R3 and R4, and an operational amplifier 821, as shown in Fig. 2.

The value of the resistance of these resistance elements R1-R4 in the differential circuit 82 are set so that R2 (the value of resistance of the resistance element R2) = R3 (that of the resistance element R3) and R1 (that of resistance element R1) = R4 (that of resistance element R4). The differential circuit 82 is set so as to output the voltage of the first input terminal 101 i.e., the reference voltage Vref to the output terminal 104 when the adjustment voltage V3 becomes the voltage V2.

For example, the values of resistance of the resistance elements R1-R4 may be set to the same value.

The voltage hold circuit 91 further comprises a feedback circuit 84, which have a resistance element R5 and a switch for feedback 72.

The switch for feedback 72 is switching means for switching ON/OFF of the feedback circuit 84. When the switch for feedback 72 is closed, the feedback circuit 84 is turned ON. When the switch for feedback 72 is opened, the feedback circuit 84 is turned OFF. Here, the open/close operation of the switch for feedback 72 may be controlled by the control means 9.

The digital/analog converter 92, which is utilized to adjust the adjustment voltage V3, is connected to the third input terminal 103. Also, the analog/digital converter 93, which is utilized to detect the output voltage V4, is connected to the output terminal 104.

The control means 9 is connected to both the digital/analog converter 92 and the analog/digital converter 93.

The control means 9 detects the output voltage V4 by means of the analog/digital converter 93 by inputting a predetermined input value to the digital/analog converter 92, and adjusting the adjustment voltage V3.

The output terminal of the integration circuit 81 in the laser control section 55 is connected to the input side of the recording circuit 431, i.e., the base terminal B1 in the transistor Tr1; and the output voltage V1 of the integration circuit 81 is input to the recording circuit 431.

The node 110 of the recording circuit 431 is connected to the second input terminal 102 in the voltage hold circuit 91.

The output side of the feedback circuit 84 (the side of the switch for feedback 72) in the voltage hold circuit 91 is connected to the inverting input terminal of the operational amplifier 811 in the integration circuit 81 of the laser control section 55. When the feedback circuit 84 is turned ON, the output voltage V4 of the voltage hold means 91 becomes equal to the voltage of the inverting input terminal (-) of the operational amplifier 811, i.e., the reference voltage Vref that is applied to the non-inverting input terminal (+) of the operational amplifier 811.

Further, when the feedback circuit 84 is turned ON, the feedback circuit 84 is subject to feedback so that the output voltage V4 decreases if the output voltage V4 of the voltage hold circuit 91 increases to be more than the reference voltage Vref, and the output voltage V4 increases if the output voltage V4 decreases to be less than the reference voltage Vref.

Next, operation of the optical disc drive 1 will be described.

The optical disc drive 1 moves the optical pick-up 3 to the target track (target address). When carrying out focus control, tracking control, sled control and rotation number control (rotation speed control), the optical disc drive 1 records (writes on) and reproduces (reads out) information (data) to and from a predetermined track of the optical disc 2.

When data is recorded onto the optical disc 2, the pre-groove that is formed on the optical disc 2 is reproduced (read out). Additionally, the data is recorded onto the optical disc 2 along the pre-groove.

When the data to be recorded onto the optical disc 2 is input to the optical disc drive 1 via an interface control section (not shown), the data is input to the encoder 54.

The data is encoded in the encoder 54, and modulated (EFM modulation) in the modulation method called EFM (Eight to Fourteen Modulation) to form an ENCODE EFM signal.

The ENCODE EFM signal is a signal formed from pulses. More specifically, each pulse has a predetermined length (period) of any one of 3T-11T. The ENCODE EFM signal is input from the encoder 54 to the laser diode driver 43.

The control means 9 set a given value for the current generator Iref. The integration circuit 81 is then charged by causing a current to flow that is derived by subtracting a current flowing from the current generator Iref to the current mirror circuit 83 from the output current from the current generator Iref. As a result, the WRITE POWER signal that is analog voltage signal is output.

The Sampling signal that is generated in the encoder 54 based on the ENCODE EFM signal is input to the laser control section 55. Then, the laser control section 55 carries out sampling of the pit portions during writing in the laser control of recording system, and carries out sampling of the land portions during both reading and writing in the laser control of the reproducing system, thereby determining a current that flows to the laser diode 5, so that a value of the output of the laser diode 5 becomes a predetermined value. The laser control section 55 outputs the WRITE POWER signal when the ENCODE EFM signal input to the base terminal B2 of the transistor Tr3 is at a high level (H), and the laser control section 55 outputs the READ POWER signal when the ENCODE EFM signal is at a low level (L).

Thus, a pit having a given length is formed (written) in the optical disc 2 when the level of the ENCODE EFM signal is high (H), while a land having a given length is formed (written) in the optical disc 2 when the level of the ENCODE EFM signal is low (L).

In this way, data is written (recorded) to a given track of the optical disc 2.

Data is recorded from the inner side of the optical disc 2 to the outer side along the pre-groove in the optical disc 2.

In the encoder 54, a predetermined ENCODE EFM signal (random EFM signal) is generated in addition to the ENCODE EFM signal mentioned above. The random EFM signal is used for output adjustment (power control) of the laser when trial writing in a test area is carried out under OPC (Optimum Power Control) procedure for determining an optimum laser output during recording of data.

Here, the OPC procedure will be described. In the optical disc 2 of CD-R (Compact Disc Recordable) type, a Lead in Area having the ATIP specific information, a PMA (Program Memory Area), and a PCA (Power Calibration Area) are arranged in this order from the outer side to the inner side in a program area to record data. The PMA is an area to write a start time and an end time of a track, and so on.

The PCA is further divided into a Test Area for trial writing and a Count Area for recording the count number.

Since recordable-type optical discs such as CD-R and CD-RW that are manufactured by different manufacturers have differences in performance (in particular, in recording performance relative to a laser output), it is necessary to in advance determine an optimum laser output (optimum laser power) for recording for each optical disc before data is recorded onto the optical disc. For this purpose, normally, optical disc drives for these optical discs are configured so that an optical laser output for recording can be changed, for example, within 15 levels in a stepwise manner, and an optimum laser output that is most suitable to an optical disc is selected from the 15 levels, and a recording operation of data to the optical disc is carried out based on the optimum laser output.

In the OPC procedure, trial writing is carried out for a Test Area of each optical disc. During trial writing in a Test Area under the OPC procedure, the random EFM signal is input to the base terminal B2 in the transistor Tr3 from the encoder 54. Further, the control means 9 can change the level of a digital/analog converter (not shown) in the laser control section 55, into a plurality of levels by using serial communication. As a result, values of current in the plurality of levels can be generated, whereby WRITE POWER signals each having any one of a plurality of levels can be generated. Since the output current during writing is determined on the basis of the WRITE POWER signals, laser beams each having any one of a plurality of output power levels can be derived. Based on the EFM signal input to the base- terminal B2 in the transistor Tr3, it is determined whether the current during writing will flow to the laser diode 5 or the GND (ground) terminal. This determination is carried out on the basis of the WRITE POWER signals, each of which may have any one of a plurality of levels.

In this way, trial writing to the test area is carried out with laser beams having any one of the plurality of output levels (i.e., with the output of the laser beam being changed in a stepwise manner). Such trial writing may be carried out a number of times (e.g., 100 times). Aflag indicating one trial writing is established in the Count Area with each trial writing.

In the OPC procedure, defining 8 as the amount of displacement between the centers of the waveforms of the signal with a period corresponding to 3T and the signal with a period corresponding to 11T in the random EFM signals, it is determined that an optimum laser output is the laser output of the laser beam corresponding to 8 that is the closest to the predetermined value 80 (e.g., four percent) within a plurality of 8 values corresponding to the WRITE POWER signals each having any one of the plurality of levels.

In this way, an optimum laser output for recording is determined, and data is recorded onto the optical disc 2 at this optimum laser output.

Here, the control means 9 detects the voltage value of the node 110 in response to an output of the laser beam at each level when carrying out trial writing, with the outputs of the laser beams having the plurality of levels. The control means 9 then stores the voltage value in the memory 53.

After an optimum laser output for recording is determined, the voltage value of the node 110 corresponding to the optimum laser output in all detected voltage values of the node 110 is applied to the third input terminal 103 in the voltage hold circuit 91.

Then, when the feedback circuit 84 in the voltage hold circuit 91 is turned ON by means of the switch for feedback 72, the voltage of the second input terminal 102 in the voltage hold circuit 91 becomes equal to the voltage applied to the third input terminal 103.

Namely, the voltage V2 of the node 110 in the recording circuit 431 is held during recording to a voltage corresponding to the optimum laser output for recording in all detected voltage values of the node 110 by the control means 9.

The voltage V2 of the node 110 is held to a voltage corresponding to the optimum laser output for recording before data is actually recorded to the program area. When data is actually recorded to the program area, the data can be recorded from a given position, e.g., an initial record start position or a record restart position, at an optimum laser output.

During reproduction, the laser beam is emitted to a given track of the optical disc 2 from the laser diode 5 in the optical pick-up 3. The laser beam is reflected on the optical disc 2, and the reflected beam is received by means of the split photodiode 6 in the optical pick-up 3.

The current in response to the amount of received light is output from the split photodiode 6. This current is then converted with an I-V amplifier (not shown) into the voltage to be output from the optical pick-up 3.

The voltage output from the optical pick-up 3 (a detection signal) is input to the analog signal processor 40. An HF (RF) signal is generated by carrying out predetermined operations such as addition, amplification, and so on with the analog signal processor 40. The HF signal is an analog signal corresponding to pits and lands written onto the optical disc 2.

The HF signal is input to the servo processor 51. In the servo processor 51, the HF signal is digitized, and also EFM demodulated (Eight to Fourteen Modulation). As a result, an EFM signal may be obtained. The EFM signal is converted (decoded) into a predetermined form of data (DATA signal) in the servo processor 51, and then input to the decoder 52.

Next, the data is decoded to a predetermined form for communication (transmission) in the decoder 52, and transmitted to the external device (e.g., computer) via the interface control section.

Tracking control, sled control, focus control, and rotation number control (rotational speed control) in the reproducing operation, which are mentioned above, are carried out as follows.

As mentioned above, the voltage signal, into which the current signal from the split photodiode 6 in the optical pick-up 3 is converted, is input to the analog signal processor 40.

The analog signal processor 40 generates the tracking error (TE) signal (voltage signal) based on the current-voltage converted signal from the split photodiode 6.

The tracking error signal is a signal that represents an amount of displacement of the objective lens in a radial direction from the center of the track (i.e., an amount of displacement of the objective lens in a radial direction from the center of the track) and the direction thereof.

The tracking error signal is input to the servo processor 51. In the servo processor 51, the tracking error signal may undergo predetermined signal processing, such as, for example inversion of phase, amplification and the like. Therefore, the tracking servo signal (voltage signal) is generated. A given drive voltage is applied to the tracking actuator 41 via the driver 21 as a result of the tracking servo signal. The objective lens moves toward the center of the track by driving the tracking actuator 41. Namely, the tracking servo is engaged.

A limit exists to follow the objective lens to the track with the drive of the tracking actuator 41. Therefore, to cover the tracking, the objective lens may be controlled so as to be returned to the reference position (carry out the sled control) by moving, under the drive of the sled motor 7 via the driver 22, the optical pick up base toward the direction equal to the mobile direction of the objective lens.

The analog signal processor 40 generates a focusing error (FE) signal (voltage signal) based on the current-voltage converted signal from the split photodiode 6.

The focus error signal is a signal that represents an amount of the displacement of the objective lens in the optical axis direction (rotational axis direction) from a focus position (i.e., the amount of the displacement of the objective lens from the focus position in the optical axis direction (rotational axis direction)).

The focus error signal is input to the servo processor 51. In the servo processor 51, the focus error signal may undergo predetermined signal processing, such as, for example, inversion of phase, amplification; and the like. As a result, a focus servo signal (voltage signal) is generated. The given driving voltage is applied to the focus actuator 42 via the driver 21 based on the focus servo signal. The objective lens moves toward the focus position by driving the focus actuator 42. Namely, the focus servo is engaged.

Further, in the servo processor 51, the control signal (voltage signal) to control the rotation number (rotational speed) of the spindle motor 11, i.e., the control signal to set to a target value the rotation number of the spindle motor 11, is generated. Then the control signal is input to the driver 23.

The driving signal (voltage signal) to drive the spindle motor 11 based on the control signal is generated in the driver 23.

The driving signal output from the driver 23 is input to the spindle motor 11. The spindle motor 11 is then driven based on the driving signal. Further, the spindle servo is engaged so that the rotation number of the spindle motor 11 becomes equal to a target value.

Next, the operation of the circuit when the output of the laser beam becomes a predetermined laser output level while the output level of the laser beam is changed in a stepwise manner during trial writing will be described.

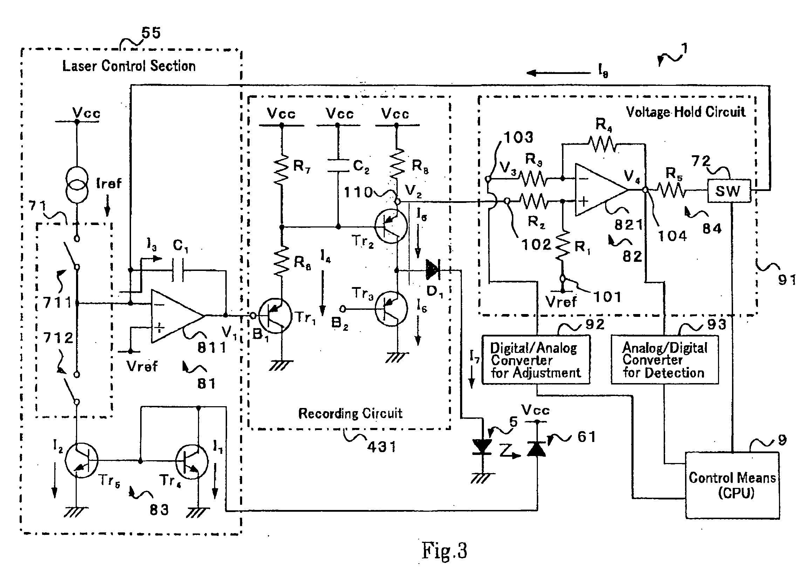

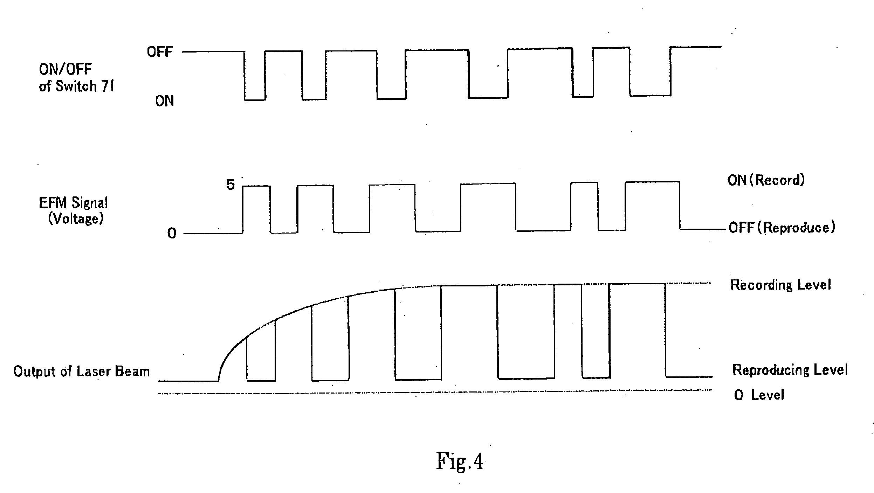

Fig. 3 shows a flow of an electric current in the circuit shown in Fig. 2 when an output of a laser beam becomes a predetermined laser output level. Fig. 4 is a timing chart illustrating a WRITE POWER signal and an output of a laser beam that is increasing from a reproduction level to a record level.

In the trial writing (OPC) procedure, the optical disc 2 is rotated at a predetermined rotational speed, and the laser diode 5 is driven such that an output of the laser beam of the laser diode 5 is that used during reproduction by means of the reproducing circuit (not shown) in the laser diode driver 43.

### (1) Operation until a laser output becomes from that for reproducing to that at a predetermined level

<1> If trial writing is carried out at a predetermined laser output level in the outputs of the laser beams each having any one of the plurality of levels during trial writing, the current output from the current generator Iref is set to a current corresponding to the predetermined laser output level.
<2> Then, the trial writing is started. During trial writing, the EFM signal as shown in Fig. 4 is input to the base terminal B2 of the transistor Tr3 in the recording circuit 431. Shortly after this input, the interlock switch 71 in the laser control section 55 is turned ON. Thus, a current starts to flow from the current generator Iref to the current mirror circuit 83 and the integration circuit 81.
<3> Before the start of the trial writing, the current I1 corresponding to the laser output during reproduction flows from the photodiode for detecting a laser beam 61 to the transistor Tr4 in the current mirror circuit 83. In this state, if the interlock switch 71 is turned ON, the current I2 equal to the current I1 flowing to the transistor Tr4 flows to the transistor Tr5 in the current mirror circuit 83.
<4> Further, when the interlock switch 71 is turned ON, the current 13, which is equal to a difference between the current Iref and the current I2, flows to the condenser Clin the integration circuit 81, thereby charging the condenser C1.
<5> Since the output voltage V1 of the integration circuit 81 decreases as the condenser C1 is charged, the current I4 starts to flow to the transistor Tr1.
<6> When the current I4 starts to flow to the transistor Tr1, the current I5 starts to flow to the transistor Tr2, and thereby the voltage V2 of the node 110 decreases.
<7> Here, the voltage level input to the base terminal B2 of the transistor Tr3 becomes low level (L) when the WRITE POWER signal is turned OFF (reproducing operation). Therefore, since the current I6 flows from the transistor Tr2 to transistor Tr3, no current flows to the diode D1. Namely, no current flows to the laser diode 5.
<8> The voltage level input to the transistor Tr3 becomes a high level (H) when the WRITE POWER signal is turned ON (recording operation). Therefore, since the current I6 does not flow to the transistor Tr3, the current I7 flows from the transistor Tr2 to the laser diode 5 via the diode D1.
   Thus, the output of the laser beam emitted from the laser diode 5 increases to a level that exceeds a level output during reproduction.
<9> The current responsive to the output of the laser beam emitted from the laser diode 5 flows from the photodiode for detecting a laser beam 61. This current is greater than that corresponding to the laser output during reproduction.
<10> Thus, the current I1 flowing to the transistor Tr4 of the current mirror circuit 83 increases, and the current I2 flowing to the transistor Tr5 increases in accordance with this increase.
<11> The current I3, which is equal to a difference between the current Iref and the current I2, flows to the condenser C1, thereby further charging the condenser C1. In addition, the difference current I3 in this state is less than the current I3 in the state <4> mentioned above.
<12> Thus, the output voltage V1 of the integration circuit 81 further decreases compared to the state <5> as the condenser C1 is charged, and the currents I4 and I4, which flow to the transistors Tr1 and Tr2 respectively, increase. Consequently, the voltage V2 of the node 110 decreases comparative to that in the state <6>.
<13> If the voltage V2 of the node 110 decreases comparative to that in the state <6>. the current I5 flowing to the transistor Tr2 increases. When the WRITE POWER signal is turned ON, the current I7, which is greater than that in the state <8>, flows to the laser diode 5, thereby further increasing the output of the laser beam.
<14> In this way, the output of the laser beam of the laser diode 5 rises to the predetermined laser output level. As shown in Fig. 4, the output level of the laser beam parabolically rises until a predetermined laser output level (i.e., recording level) is attained.
<15> If the output of the laser beam of the laser diode 5 becomes equal to the predetermined laser output level, the current I1 flowing to the transistor Tr4 of the current mirror circuit 83 becomes equal to the current Iref output from the current generator Iref. Namely, the current I2 flowing to the transistor Tr5 becomes equal to the current Iref.
<16> When the current I2 is equal to the current Iref, the current I3 does not flow to the condenser C1. Therefore, the output voltage V1 of the integration circuit 81 becomes equal to a predetermined value. Also, the voltage V2 of the node 110 keeps at the voltage when the output of the laser beam emitted from the laser diode 5 becomes a predetermined laser output level.

Here, if the output of the laser beam becomes greater than the predetermined laser output level, the currents I1 and I2, which flow to the transistors Tr4 and Tr5 in the current mirror circuit 83 respectively, become greater than the current Iref output from the current generator Iref because the current flowing from the photodiode for detecting a laser beam 61 becomes greater.

In this case, since the condenser C1 is discharged and a current greater than the current Iref flows to the transistor Tr5 in the current mirror circuit 83, the output voltage V1 of the integration circuit 81 increases. Thus, the voltage V2 of the node 110 also increases, and the current I5 flowing to the transistor Tr2 becomes smaller. As a result, since the output of the laser beam of the laser diode 5 becomes smaller, the output of the laser beam returns to the predetermined laser output level.

On the other hand, if the output of the laser beam becomes less than the predetermined laser output level, the currents I1 and I2 flowing to the transistors Tr4 and Tr5 in the current mirror circuit 83 become less than the current Iref output from the current generator Iref because the current flowing from the photodiode for detecting a laser beam 61 also becomes smaller.

In this case, the current I3, which is equal to a difference between the current Iref and the current I2, flows to the condenser C1, thereby charging the condenser C1. Thus, the output voltage V1 of the integration circuit 81 decreases and the voltage V2 of the node 110 also decreases; and the current I5 flowing to the transistor Tr2 becomes greater. As a result, since the output of the laser beam of the laser diode 5 becomes greater, the output of the laser beam returns to an output of a predetermined level.

In this way, after the output of the laser beam became equal to a predetermined laser output level, if the output of the laser beam becomes greater than the predetermined laser output level, the optical disc drive 1 operates so that the output of the laser beam is decreased. On the other hand, after the output of the laser beam became equal to a predetermined laser output level, if the output becomes less than the predetermined laser output level, the optical disc drive 1 operates so that the output of the laser beam is increased. Accordingly, an output of the laser beam can be kept constant at a predetermined laser output level.

Further, if data is actually recorded in the program area, the optical disc drive 1 operates so that the output of the laser beam is kept constant at the optimum level for recording, once the output of the laser beam becomes equal to an optimum laser output for recording, as well as during trial writing.

The control means 9 detects a voltage value of the node 110 to determine an output of the laser beam that will become a predetermined laser output level between after the output of the laser beam became the predetermined laser output level and until the trial writing with the predetermined laser output level is finished.

Next, the control operation of the control means 9 for detecting a voltage value of the node 110 corresponding to a predetermined laser output level will be described.

### (2) Detection of a voltage value of the node 110 to determine an output of the laser beam

<1> The feedback circuit 84 in the voltage hold circuit 91 is turned OFF prior to the detection of the voltage value of the node 110. At this point, the output voltage V4 of the output terminal 104 is not returned to the integration circuit 81 in the laser control section 55.
<2> When detecting the voltage value of the node 110, the output voltage V4 of the output terminal 104 in the voltage hold circuit 91 is detected via the analog/digital converter 93. The adjustment voltage V3 applied to the third input terminal 103 via the digital/analog converter 92 is adjusted so as to become the reference voltage Vref.
<3> The voltage value of the adjustment voltage V3 when the output voltage V4 becomes the reference voltage Vref is stored in the memory 53.

As mentioned above, the voltage value of the adjustment voltage V3 when the output voltage V4 becomes the reference voltage Vref becomes equal to the voltage value of the second input terminal 102, i.e., the voltage V2 of the node 110 when the output of the laser beam becomes the predetermined laser output level.

In this way, the voltage value of the node 110 is detected when the output of the laser beam becomes the predetermined laser output level.

Similarly, in the other output levels (for example, 14 levels) of the laser beam, the voltage value of the node 110 is detected when the output of the laser beam becomes equal to the laser output of each of the levels.

Thus, in all of the plurality of output levels of the laser beam, the voltage value of the node 110 corresponding to the output of the laser beam at each level is detected.

Then, after the optimum level for recording of laser output is determined, the voltage value of the node 110 corresponding to the optimum laser output for recording is applied to the third input terminal 103.

As mentioned above, the application of the voltage to the third input terminal 103 is carried out before data is actually recorded to the program area.

When actually recording data to the program area, the voltage V2 of the node 110 is held at a voltage value corresponding to the optimum laser output, during recording from a given position e.g., an initial record start position or a record restart position.

Next, operation of the voltage hold means (the voltage hold circuit 91), which holds the voltage V2 of the node 110 at the voltage value when the output of the laser beam becomes the optimum laser output for recording, will be described.

### (3) Hold of a voltage value by the voltage hold means

<1> After the voltage value corresponding to the optimum laser output for. recording is applied to the third input terminal 103, the feedback. circuit 84 is turned ON by means of the switch for feedback 72.
<2> As mentioned above, when the feedback circuit 84 is turned ON, the output voltage V4 becomes equal to the voltage of the inverting input terminal of the operational amplifier 811 of the integration circuit 81 in the laser control section 55, i.e., the reference voltage Vref.
<3> Thus, the voltage V2 of the node 110 becomes equal to the voltage value applied to the third input terminal 103. The voltage V2 of the node 110 is held to the voltage value by keeping applying the voltage value to the third input terminal 103.

As mentioned above, when data is actually recorded to the program area, the voltage value corresponding to the optimum laser output for recording is already applied to the third input terminal 103. Therefore, the voltage V2 of the node 110 becomes the voltage value corresponding to the optimum laser output for recording.

Namely, data recording can be started with the output of the laser beam being the optimum laser output during recording.

Thus, when actually recording data to the program area, data can be recorded with the optimum laser output during recording from a given position e.g., an initial record start position or a record restart position.

Here, if the voltage V2 of the node 110 becomes greater than the voltage value corresponding to the optimum laser output for recording, the output voltage V4 becomes greater than the reference voltage Vref.

In this case, the current I8 flows from the output terminal 104 of the voltage hold circuit 91 to the integration circuit 81 in the laser control section 55, thereby charging the condenser C1 by the current I8.

Thus, the output voltage V1 of the integration circuit 81 drops, and as a result the voltage V2 of the node 110 drops.

On the other hand, if the voltage V2 of the node 110 drops to be less than the voltage value corresponding to the optimum laser output during recording, the output voltage V4 becomes less than the reference voltage Vref.

In this case, the condenser C1 is discharged, and the current I8 flows in the inverse direction of the arrow shown in Fig. 3, i.e., from the condenser C1 to the output terminal 104 of the voltage hold circuit 91.

Thus, the output voltage V1 of the integration circuit 91 is built up, and as a result the voltage V2 of the node 110 is built up.

In this way, by applying the output voltage V4 of the voltage hold circuit 91 to the integration circuit 81 in the laser control section 55 (the input side of the laser diode driver 43), the optical disc drive 1 is operated so that the voltage V2 of the node 110 is caused to drop when the voltage V2 of the node 110 increases more than a voltage value equal to that of an optimum laser output during recording, and the voltage V2 of the node 110 is caused to build up when the voltage V2 of the node 110 drops to a level that is lower than the voltage value to become an optimum laser output during recording. Therefore, the voltage V2 of the node 110 is kept at a constant value to be equal to an optimum laser output for recording.

Thus, the. voltage V2 of the node 110 is always held at a constant voltage value while the optical disc drive 1 is active.

As explained above, according to the optical disc drive 1of the present invention, a data recording operation can be started when an output of a laser beam becomes an optimum laser output for recording.

Thus, when recording data onto an optical disc 2, the optical disc drive 1 can resume from a consecutive position i.e., record restart position after suspension of the data recording operation without overwriting. Therefore, in the optical disc drive having a buffer underrun error proof (BURN-Proof) function, a data recording operation can be suspended and then resumed so that the data is consecutively written onto the optical disc with an optimum output level for recording.

Further, after the optimum laser output for recording is determined during trial writing operation, the optical disc drive 1 holds the voltage value to make it an optimum laser output for recording. Therefore, when data is actually recorded to the program area, the output of the laser beam can be set to the optimum laser output for recording from an initial record start position.

As described above, it should be noted that even though the optical disc drive of the present invention has been described with reference to the embodiment shown in the drawings, the present invention is not limited to such a structure, various elements described above can be replaced with any other element capable of performing the same or a similar function.

For example, the optical disc drive of the present invention is not limited to the device capable of recording and/or reproducing data to and/or from an optical disc. The present invention can be applied to record only optical disc drives.

The optical disc drive of the present invention may also be applied to other various optical disc drives for recording and/or reproducing to and/or from various types of optical disc.

Further, in this embodiment, the voltage of the node to be held (i.e., the voltage of the section for determining the output of the laser beam) is detected during trial writing operation, but the present invention is not limited to such an operation. The voltage of the node to be held may be detected when data is actually being recorded to the program area, e.g., at the start of record.

Moreover, in the present invention, the section for determining the output of the laser beam is not limited to that shown in the drawings.

## Claims

1. An optical disc drive that can read out data from or record and read out data to and from an optical disc, the optical disc drive comprising;
a rotational driving mechanism for rotating the loaded optical disc;
an optical pick-up having emitting means that emits a laser beam for recording data onto the optical disc;
a drive circuit for driving said emitting means, said drive circuit having a section for determining an output of the laser beam; and
voltage hold means for holding a voltage at the section of said drive circuit to a voltage value at which an output of the laser beam becomes an optimum level for recording.

2. The optical disc drive according to claim 1, wherein said voltage hold means holds the voltage at the section of said drive circuit to the voltage value, at which the output of the laser beam becomes the optimum level for recording, after trial writing is carried out on the optical disc by changing the output of the laser beam in a stepwise manner to determine the optimum laser output for recording.

3. The optical disc drive according to claim 2, further comprising detection means for detecting voltage values corresponding to a plurality of output levels of the laser beam during the trial writing, in which said voltage hold means is configured so as to hold the voltage at the section to a voltage value corresponding to the optimum level for recoding among the voltages values detected by said detection means.

4. The optical disc drive according to claim 1, further comprising a memory for storing data, and the optical disc drive being configured so that the recoding operation is suspended when the amount of data stored in the memory becomes equal to or less than a predetermined amount during the recoding operation, wherein said voltage hold means is configured so as to hold the voltage at the section just before the recording operation is suspended.

5. The optical disc drive according to claim 4, wherein said voltage hold means includes a circuit having a first input terminal to which a reference voltage is input, a second input terminal to which the voltage of the section is input, a third input terminal to which an adjustment voltage is input, and an output terminal for outputting an output voltage, wherein the optical disc drive is constructed so as to apply the adjustment voltage when the output voltage becomes the reference voltage, to the third input terminal.

6. The optical disc drive according to claim 5, further comprising a digital/analog converter that is used for adjusting the adjustment voltage.

7. The optical disc drive according to claim 5, further comprising an analog/digital converter that is used for detecting the output voltage.

8. The optical disc drive according to claim 5, wherein said voltage hold means is a differential circuit using operational amplifier.

9. The optical disc drive according to claim 5, wherein said voltage hold means has a feedback circuit that applies the output voltage to the input side of said drive circuit so that the voltage at the section is dropped when the voltage at the section is raised more than the voltage value of the optimum level for recording and so that the voltage at the section is raised when the voltage at the section is dropped less than the voltage value of the optimum level for recording.

10. The optical disc drive according to claim 9, further comprising switching means for switching said feedback circuit on and off.

11. The optical disc drive according to claim 1, wherein the emitting means has a laser diode.
